(19) Europäisches Patentamt
European Patent Office
Office européen des brevets

(11) **EP 4 586 356 A1**

(12) **EUROPEAN PATENT APPLICATION**
published in accordance with Art. 153(4) EPC

(43) Date of publication:
**16.07.2025 Bulletin 2025/29**

(21) Application number: 23883171.3

(22) Date of filing: **27.10.2023**

(51) International Patent Classification (IPC):
$H01M\ 10/0569^{(2010.01)}$    $H01M\ 4/525^{(2010.01)}$
$H01M\ 4/505^{(2010.01)}$    $H01M\ 4/131^{(2010.01)}$
$H01M\ 4/587^{(2010.01)}$    $H01M\ 4/36^{(2006.01)}$
$H01M\ 10/0525^{(2010.01)}$    $H01M\ 50/105^{(2021.01)}$
$H01M\ 4/02^{(2006.01)}$

(52) Cooperative Patent Classification (CPC):
H01M 4/02; H01M 4/131; H01M 4/36; H01M 4/505;
H01M 4/525; H01M 4/587; H01M 10/0525;
H01M 10/0569; H01M 50/105

(86) International application number:
**PCT/KR2023/016895**

(87) International publication number:
**WO 2024/091067 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.10.2022 KR 20220140773
27.10.2022 KR 20220140774
24.10.2023 KR 20230143338**

(71) Applicant: **LG Energy Solution, Ltd.
Seoul 07335 (KR)**

(72) Inventors:
• **PARK, Jin Bum**
  **Daejeon 34122 (KR)**
• **KO, Myung Soo**
  **Daejeon 34122 (KR)**
• **HEO, Min Ji**
  **Daejeon 34122 (KR)**
• **CHOI, Eun Seok**
  **Daejeon 34122 (KR)**
• **KIM, Hyun Tae**
  **Daejeon 34122 (KR)**

(74) Representative: **Plasseraud IP
104 Rue de Richelieu
CS92104
75080 Paris Cedex 02 (FR)**

(54) **LITHIUM SECONDARY BATTERY**

(57) A lithium secondary battery according to the present invention includes a battery case, and an electrode assembly and an electrolyte received in the battery case, and has a $V_{d-40}$, which is a voltage retention rate during 40 C discharge represented by Equation 1 below, of 74% or greater:

[Equation 1]

$$V_{d-40}\ (\%) = (V_{f-40}\ /\ V_{i-40})\ \times\ 100.$$

In [Equation 1] above, $V_{f-40}$ is a voltage of the lithium secondary battery after applying a discharge pulse at a rate of 40 C, and $V_{i-40}$ is a voltage of the lithium secondary battery before applying a discharge pulse at a rate of 40 C.

FIG.1

**EP 4 586 356 A1**

**Description**

## TECHNICAL FIELD

### Cross-reference to Related Applications

This application claims the benefit of Korean Patent Application Nos. 10-2022-0140773, filed on October 27, 2022, 10-2022-0140774, filed on October 27, 2022, and 10-2023-0143338, filed on October 24, 2023, in the Korean Intellectual Property Office, the disclosures of which are incorporated herein in their entirety.

### Technical Field

The present invention relates to a lithium secondary battery.

## BACKGROUND ART

Demand for batteries as an energy source has been significantly increased as technology development and demand with respect to power tools, electric vehicles, and energy storage systems (ESSs) have recently increased, and thus a variety of researches on batteries capable of meeting various needs have been carried out. As needs of the market for the lithium secondary batteries, having high capacity, as a power source of such a device have been increased, researches for increasing cell energy density have been actively carried out. In addition, as batteries which can be applied to devices, requiring a high output, such as power tools, the demand for batteries having excellent capacity characteristics as well as excellent rate characteristics has been increasing.

However, when the secondary battery embedded in the power tool is discharged with a high output, the system operation of the power tool is terminated due to the voltage drop of the secondary battery. That is, since the potential value of the secondary battery is greatly reduced during the high-rate discharge, the system determines that the battery capacity is insufficient even though the battery capacity remains, thereby causing the power of the power tool to be turned off.

In addition, a cylindrical-type battery is generally used as a battery for a power tool. In the case of a cylindrical-type battery, since the battery can is heavy in weight, the total weight of the power tool is increased when the cylindrical-type battery is used, and thus there is a limitation in that work convenience is reduced.

## DISCLOSURE OF THE INVENTION

### TECHNICAL PROBLEM

In order to solve the above-described problems, the present invention provides a lithium secondary battery having a low degree of voltage drop in the battery during high-rate discharge, thereby being capable of preventing the power-off phenomenon of a power tool.

In addition, the present invention provides a pouch-type lithium secondary battery having a low degree of voltage drop in the battery during high-rate discharge while having excellent work convenience due to a relatively light weight thereof, and having low resistance and excellent output properties.

### TECHNICAL SOLUTION

According to an aspect of the present invention, there is provided a lithium secondary battery which includes a battery case, and an electrode assembly and an electrolyte received in the battery case, and has a $V_{d-40}$, which is a voltage retention rate during 40 C discharge represented by Equation 1 below, of 74% or greater, specifically, 74% to 85%.

$$[\text{Equation 1}]$$

$$V_{d-40} \ (\%) \ = \ (V_{f-40} \ / \ V_{i-40}) \ \times \ 100$$

In Equation 1 above, $V_{f-40}$ is a voltage of the lithium secondary battery after applying a discharge pulse at a rate of 40 C, and $V_{i-40}$ is a voltage of the lithium secondary battery before applying a discharge pulse at a rate of 40 C.

Meanwhile, the lithium secondary battery according to the present invention may have a $V'_{d,5}$, which is a voltage retention rate during continuous discharge represented by Equation 2 below, of 72% or greater, preferably 72% to 82%.

[Equation 2]

$$V'_{d,5}\ (\%)\ =\ (V'_{f,5}\ /\ V'_{i})\ \times\ 100$$

In Equation 2 above, $V'_{f,5}$ is a voltage of the lithium secondary battery after applying a discharge pulse 5 times while increasing a rate by 40 C, and $V'_i$ is an initial voltage of the lithium secondary battery fully charged before applying a discharge pulse. At this time, the first discharge pulse is applied at a rate of 24 C, and the fifth discharge pulse is applied at a rate of 40 C.

According to the present invention, the electrode assembly includes a positive electrode, a separator, and a negative electrode, wherein the positive electrode may include, as a positive electrode active material, a lithium nickel-based oxide containing 80 mol% or greater, preferably 85 mol% to 90 mol% of nickel, based on the total number of moles of transition metals except for lithium.

Preferably, the lithium nickel-based oxide may be a compound represented by Formula 1 below.

[Formula 1]

$$Li_{1+x}[Ni_aCo_bM1_cM2_d]_{1-x}O_{2-y}X_y$$

In Formula 1 above, $0.8 \leq a \leq 0.95$, $0 \leq b \leq 0.2$, $0 \leq c \leq 0.2$, $0 \leq d \leq 0.1$, $a+b+c+d=1$, $0 \leq x \leq 0.3$, and $0 \leq y \leq 0.2$, M1 is Mn, Al, or a combination thereof, M2 is one metal element selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and X is one or more elements selected from the group consisting of F, Cl, Br, I, At, P, and S.

Meanwhile, in the present invention, the positive electrode may include a positive electrode active material layer having a porosity of greater than 30%, specifically 32% to 38%.

According to the present invention, the electrolyte may include ethyl propionate (EP), and at this time, the ethyl propionate may be included in an amount of 80 wt% or less, specifically 40 wt% to 70 wt%, based on the total weight of the electrolyte.

In addition, the negative electrode may include artificial graphite as a negative electrode active material.

Meanwhile, in the present invention, the battery case may be a pouch-type battery case.

## ADVANTAGEOUS EFFECTS

A lithium secondary battery according to the present invention is characterized by having a voltage retention rate $V_{d-40}$ of 75% or greater before and after discharge pulse application when a discharge pulse is applied at a rate of 40 C. As a result, even when the lithium secondary battery of the present invention is discharged at a high rate, the degree of a voltage drop in the battery is not large, so that it is possible to prevent a power shutdown phenomenon of a power tool due to high-rate discharge when the battery according to the present invention is used as a power source of the power tool.

In addition, when the lithium secondary battery according to the present invention is a pouch-type lithium secondary battery, due to a relatively light weight thereof, work convenience is excellent.

In addition, when the lithium secondary battery according to the present invention is a pouch-type lithium secondary battery, there are multiple electrode tabs, and accordingly, the resistance is lower than that of a cylindrical battery, and the output properties are excellent, so that the lithium secondary battery is suitable for use as a power source for a power tool.

## BRIEF DESCRIPTION OF THE DRAWINGS

The drawings attached herein illustrate preferred embodiments of the present invention by example, and serve to enable technical concepts of the present invention to be further understood together with detailed description of the invention given below, and therefore the present invention should not be interpreted only with matters in such drawings.

FIG. 1 is a graph showing a voltage change of a battery over time when a continuous discharge test is performed on lithium secondary batteries respectively manufactured in Example 1 and 2 and Comparative Example 1.
FIG. 2 is a graph showing a voltage change of a battery over time when a continuous discharge test is performed on lithium secondary batteries respectively manufactured in Example 2 and Comparative Example 2.
FIG. 3 is a graph showing a voltage change of a battery over time when a continuous discharge test is performed on lithium secondary batteries respectively manufactured in Examples 1 and 3.

**MODE FOR CARRYING OUT THE INVENTION**

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout the specification.

Unless otherwise defined, all the terms used herein (including technical and scientific terms) will be used in a sense that can be commonly understood to those of ordinary skill in the art to which the inventive concept pertains. In addition, the terms that are defined in a commonly used dictionary are not interpreted ideally or excessively unless specifically defined.

The terms used herein are for the purpose of describing embodiments and are not intended to be limiting of the present invention. In the present disclosure, singular forms include plural forms unless the context clearly indicates otherwise. As used herein, the terms "comprises" and/or "comprising" are intended to be inclusive of the stated elements, and do not exclude the possibility of the presence or the addition of one or more other elements.

In the present specification, when a part is said to include a certain component, it means that the part may further include another component rather than excluding another component unless otherwise stated.

In the present specification, the description of "A and/or B" means A, or B, or A and B.

In the present specification, "%" means wt% unless otherwise noted.

In the present specification, $D_{50}$ means a particle diameter corresponding to 50% of the volume accumulation in a particle diameter distribution curve of particles. The $D_{50}$ be measured by, for example, a laser diffraction method. The laser diffraction method generally enables measurement of a particle diameter from a sub-micron region to several millimeters, so that results of high reproducibility and high resolution may be obtained.

In the present specification, "specific surface area" is measured by a BET method, and specifically, may be calculated from the adsorption amount of nitrogen gas under a liquid nitrogen temperature (77K) using Belsorp-mino II of BEL Japan Co.

Hereinafter, the present invention will be described in more detail.

**Lithium secondary battery**

A lithium secondary battery according to the present invention includes a battery case, and an electrode assembly and an electrolyte received in the battery case, and has a $V_{d-40}$ of 74% or greater, which is a voltage retention rate during 40 C discharge represented by Equation 1 below.

[Equation 1]

$$V_{d-40} \ (\%) \ = \ (V_{f-40} \ / \ V_{i-40}) \ \times \ 100$$

In [Equation 1] above, $V_{f-40}$ is a voltage of a lithium secondary battery after applying a discharge pulse at a rate of 40 C, and $V_{i-40}$ is a voltage of a lithium secondary battery before applying a discharge pulse at a rate of 40 C.

During the 40 C discharge, the voltage retention rate $V_{d-40}$ may be 74% or greater, specifically 74% to 85%, and more specifically 74% to 80%. If $V_{d-40}$ is less than 74%, a battery voltage becomes too low after high-rate discharge, so that a power tool system may determine that a battery capacity is insufficient and turn off a power tool even though there is actually a battery capacity still remaining. However, in the case of the lithium secondary battery according to the present invention, the $V_{d-40}$ is as high as 74% or greater, so that the degree of a voltage drop is not large even if the battery is subjected to high-rate discharge, which makes the battery suitable for use as a power source for a power tool.

Meanwhile, the lithium secondary battery according to the present invention may have a $V'_{d,5}$ of 72% or greater, specifically 72% to 82%, and more specifically 74% to 82%, which is a voltage retention rate during continuous discharge represented by Equation 2 below.

[Equation 2]

$$V'_{d,5} \ (\%) \ = \ (V'_{f,5} \ / \ V'_{i}) \ \times \ 100$$

In [Equation 2 above, $V'_{f,5}$ is a voltage of a lithium secondary battery after applying a discharge pulse 5 times while increasing a rate by 40 C, and $V'_{i}$ is an initial voltage of a fully-charged lithium secondary battery before applying a discharge pulse, and the first discharge pulse is applied at a rate of 24 C, and the fifth discharge pulse is applied at a rate of 40 C.

If the voltage retention rate $V'_{d,5}$ during continuous discharge satisfies the above numerical range, a battery voltage does not become too low even when the battery is continuously discharged, so that the battery of the present invention may be suitable for use as a power source for a power tool that requires continuous discharge.

Discharge properties of a lithium secondary battery may vary depending on an electrode composition; electrode design details such as loading and porosity; and/or an electrolyte composition, and particularly, may be affected by the composition and design of a positive electrode and an electrolyte. Therefore, it is possible to control the composition and design details of an electrode and the composition of an electrolyte to manufacture a lithium secondary battery having desired discharge properties. For example, a lithium secondary battery having the above-described discharge properties may be manufactured by applying a positive electrode including a lithium nickel-based oxide containing 80 mol% or greater of nickel as a positive electrode active material, and having 30% or greater of porosity of a positive electrode active material layer, a negative electrode including artificial graphite as a negative electrode active material, and an electrolyte including ethyl propionate, but the embodiment is not limited thereto.

The lithium secondary battery according to the present invention may be used in a battery cell used as a power source for a small-sized device such as a power tool, and also, may be used as a unit cell in a medium-and-large-sized battery module including a plurality of battery cells. Preferable examples of the above medium-and large-sized device may include electric vehicles, hybrid electric vehicles, plug-in hybrid electric vehicles, energy storage system (ESS), and the like.

Hereinafter, each component of the lithium secondary battery according to the present invention will be described in more detail.

**<Electrode assembly>**

An electrode assembly according to the present invention may include a positive electrode, a negative electrode, and a separator disposed between the positive electrode and the negative electrode.

Hereinafter, each component of the electrode assembly will be described in more detail.

**(1) Positive electrode**

A positive electrode may include a positive electrode current collector, and a positive electrode active material layer formed on the positive electrode current collector.

The positive electrode current collector is not particularly limited as long as it has conductivity without causing a chemical change in the battery. For example, as the current collector, stainless steel, aluminum, nickel, titanium, fired carbon, or aluminum or stainless steel that is surface-treated with one of carbon, nickel, titanium, silver, and the like may be used.

The positive electrode current collector may have a thickness of 8 $\mu$m to 500 $\mu$m, specifically 8 $\mu$m to 300 $\mu$m, and more specifically 10 $\mu$m to 50 $\mu$m. If the loading amount of a positive electrode active material layer is reduced to lower the resistance of a positive electrode in order to improve the output properties of a battery, the positive electrode active material may be embedded in the positive electrode current collector and disconnect the positive electrode current collector. However, if the thickness of a positive electrode current collector according to the present invention satisfies the above numerical range, the positive electrode current collector is thicker than a typical one, so that the disconnection of the current collector may be prevented.

The positive electrode active material layer may include a positive electrode active material, and may further include, if necessary, a conductive material, a binder, and the like.

The positive electrode active material is a compound capable of reversible intercalation and de-intercalation of lithium, and may include a lithium metal oxide including one or more metals, such as cobalt, manganese, nickel, and aluminum, and lithium.

Specifically, the positive electrode active material may include a lithium nickel-based oxide. In this case, the lithium nickel-based oxide may contain 80 mol% or greater, specifically 80 mol% to 95 mol%, more specifically 80 mol% to 90 mol%, and even more specifically 85 mol% to 90 mol% of nickel based on the total number of moles of transition metals except for lithium. If the content of nickel satisfies the above range, it is possible to secure a battery capacity by securing a sufficient positive electrode energy density, while minimizing a voltage drop in the battery during high-rate discharge.

The lithium nickel-based oxide may be a compound represented by Formula 1 below.

$$[\text{Formula 1}] \qquad Li_{1+x}[Ni_aCo_bM1_cM2_d]_{1-x}O_{2-y}X_y$$

In Formula 1 above, it may be that $0.8 \leq a \leq 0.95$, $0 \leq b \leq 0.2$, $0 \leq c \leq 0.2$, $0 \leq d \leq 0.1$, $a+b+c+d=1$, $0 \leq x \leq 0.3$, and $0 \leq y \leq 0.2$.

In Formula 1 above, M1 may be Mn, Al, or a combination thereof.

In Formula 1 above, M2 may be one metal element selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo.

In Formula 1 above, X may be one or more elements selected from the group consisting of F, Cl, Br, I, At, P, and S.

The positive electrode active material may be included in an amount of 60 wt% to 99 wt%, preferably 70 wt% to 99 wt%, and more preferably 80 wt% to 98 wt%, based on the total weight of the positive electrode active material layer. If the content of a positive electrode active material satisfies the above range, it is possible to improve a battery capacity by securing a sufficient positive electrode energy density.

A positive electrode conductive material is a component for further improving the conductivity of a positive electrode active material, and the conductive material is not particularly limited as long as it has conductivity without causing a chemical change in the battery.

For example, as a positive electrode conductive material, carbon powder such as carbon black, acetylene black, Ketjen black, channel black, furnace black, lamp black, or thermal black; graphite powder such as natural graphite, artificial graphite, or graphite with a highly developed crystal structure, conductive fiber such as carbon fiber or metal fiber; fluorocarbon powder; conductive powder such as aluminum powder or nickel powder; conductive whisker such as zinc oxide or potassium titanate; conductive metal oxide such as titanium oxide; a conductive material such as polyphenylene derivative, or the like may be used.

A positive electrode conductive material according to the present invention may include both a point-type conductive material and a linear conductive material. Specifically, the positive electrode conductive material may include a point-type conductive material and a linear conductive material at a weight ratio of 1:1 to 50:1, preferably 2:1 to 20:1, and more preferably 2:1 to 10:1. If the ratio of the point-type conductive material and the linear conductive material satisfies the above numerical range, it is possible to prevent a problem in which side reactions increase as the specific surface area of the conductive material increases, thereby generating an excessive gas in a hot box test, and to lower positive electrode resistance by sufficiently securing a conductive network within a positive electrode.

In this case, the content of the linear conductive material may be 2.0 wt% or less, specifically 0.05 wt% to 1.0 wt%, and more specifically 0.05 wt% to 0.5 wt%, based on the total weight of the positive electrode active material layer.

The positive electrode conductive material may be included in an amount of 1 wt% to 20 wt%, preferably 1 wt% to 15 wt%, and more preferably 1 wt% to 10 wt%, based on the total weight of the positive electrode active material layer. If the content of the positive electrode conductive material in the positive electrode active material layer satisfies the above range, it is possible to improve electrical conductivity of the positive electrode by securing a positive electrode conductive network.

A positive electrode binder is a component that assists in coupling between an active material, a conductive material, etc., and coupling to a current collector.

Examples of the positive electrode binder may include polyvinylidene fluoride, polyvinyl alcohol, carboxymethyl cellulose (CMC), starch, hydroxypropyl cellulose, regenerated cellulose, polyvinylpyrrolidone, polyethylene (PE), polypropylene, an ethylene-propylene-diene monomer, a sulfonated ethylene-propylene-diene monomer, styrene-butadiene rubber, fluororubber, various copolymers thereof, or the like, and any one thereof or a mixture of two or more thereof may be used.

The positive electrode binder may be included in an amount of 0.5 wt% to 5.0 wt%, specifically 1.0 wt% to 4.0 wt%, and more specifically 1.0 wt% to 3.5 wt%, based on the total weight of the positive electrode active material layer. If the content of the positive electrode binder satisfies the above range, it is possible to secure excellent positive electrode adhesion since a contact area between the positive electrode binder and the positive electrode active material increases.

Meanwhile, the positive electrode active material layer may have a loading amount of less than 11.0 mg/cm$^2$, specifically 8.0 mg/cm$^2$ to 10.0 mg/cm$^2$, and more specifically 8.0 mg/cm$^2$ to 9.4 mg/cm$^2$. If the loading amount of the positive electrode active material layer is 11.0 mg/cm$^2$ or greater, there is a problem in that as a positive electrode resistance value increases, the battery has increased resistance, thereby having degraded output properties.

The porosity of the positive electrode active material layer may be greater than 30%, specifically 32% to 38%, and more specifically 32% to 37%. If the porosity of the positive electrode active material layer satisfies the above range, the positive electrode has lowered interfacial resistance, which may improve the output characteristics of the battery, and the density between the current collector and the positive electrode active material does not excessively decrease, which may improve electronic conductivity.

The filling density of the positive electrode active material layer may be more than 2.8 g/cc, specifically 2.8 g/cc to 3.5 g/cc, more specifically 2.9 g/cc to 3.2 g/cc, and accordingly the porosity of the positive electrode active material layer may have the appropriate numerical range described above.

Meanwhile, the positive electrode may be manufactured according to a typical method for manufacturing a positive electrode, except that the above-described positive electrode active material is used. Specifically, the positive electrode may be manufactured by preparing a positive electrode slurry composition including the above-described positive electrode active material, a positive electrode conductive material and/or a positive electrode binder, and then applying the positive electrode slurry composition on a positive electrode current collector, followed by drying and roll-pressing the composition.

In addition, in another method, the positive electrode may also be manufactured by casting the positive electrode slurry composition on a separate support, and then laminating a film obtained by being peeled off from the support on a positive electrode current collector.

**(2) Negative electrode**

A negative electrode may include a negative electrode current collector, and a negative electrode active material layer formed on the negative electrode current collector. Alternatively, the negative electrode may be a graphite electrode composed of carbon (C). Alternatively, the negative electrode may be a metal itself.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used.

The negative electrode current collector may typically have a thickness of 3 $\mu$m to 500 $\mu$m, and as in the case of the positive electrode current collector, microscopic irregularities may be formed on the surface of the negative electrode current collector to strengthen the adhesion of a negative electrode active material. For example, the negative electrode current collector may be used in various forms such as a film, a sheet, a foil, a net, a porous body, a foam, a non-woven body, and the like.

The negative electrode active material layer may include a negative electrode active material, and may further include, if necessary, a conductive material, a binder, and the like.

The negative electrode active material is a material capable of reversible intercalation/de-intercalation of a lithium metal and or lithium ions.

The negative electrode active material may include at least one selected from the group consisting of a carbon-based material, a metal or an alloy of the metal and lithium, a metal composite oxide, a material capable of doping and undoping lithium, and a transition metal oxide.

The carbon-based active material may be crystalline carbon, amorphous carbon, or a combination thereof. Examples of the crystalline carbon may include graphite such as an irregular, planar, flaky, spherical, or fibrous natural graphite or artificial graphite, and examples of the amorphous carbon may include soft carbon (low-temperature fired carbon) or hard carbon, mezophase pitch carbides, fired cokes, and the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium may be used.

As the metal composite oxide, one selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0 \leq x \leq 1$), $Li_xWO_2$($0 \leq x \leq 1$), and $Sn_xMe_{1-x}Me'_yO_z$(Me: Mn, Fe, Pb, Ge; Me': Al, B, P, Si, elements in Group 1, Group 2, and Group 3 of the periodic table, halogen; $0 < x \leq 1$; $1 \leq y \leq 3$; $1 \leq z \leq 8$) may be used.

The material capable of doping and undoping lithium may be Si, $SiO_x$($0 < x \leq 2$), an Si-Y alloy (wherein Y is an element selected from the group consisting of an alkali metal, an alkaline earth metal, a Group 13 element, a Group 14 element, a transition metal, a rare earth element, and a combination thereof, but not Si), Sn, $SnO_2$, Sn-Y (wherein Y is an element selected from the group consisting of an alkali metal, an alkaline earth metal, a Group 13 element, a Group 14 element, a transition metal, a rare earth element, and a combination thereof, but not Sn), and the like, or at least one thereof may be mixed with $SiO_2$ and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may be a lithium-containing titanium composite oxide (LTO), a vanadium oxide, a lithium vanadium oxide, and the like.

Specifically, the negative electrode active material according to the present invention may be artificial graphite, and more specifically, may be artificial graphite surface-coated with hard carbon. When artificial graphite is used as a negative electrode active material, there is an effect of improving capacity properties of a battery by lowering the resistance of a negative electrode, while lowering an overvoltage during charging to prevent lithium precipitation caused by side reactions, thereby improving cycle lifespan properties of the battery.

The negative electrode active material may be included in an amount of 60 wt% to 99 wt%, preferably 70 wt% to 99 wt%, and more preferably 80 wt% to 99 wt%, based on the total weight of the negative electrode active material layer. If the content of a negative electrode active material satisfies the above range, it is possible to maintain the contents of a negative electrode conductive material and a negative electrode binder at a desirable level, and improve a battery capacity by securing a sufficient negative electrode energy density.

A negative electrode conductive material is a component for further improving the conductivity of a negative electrode active material, and the conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite, artificial graphite, or graphite with a highly developed crystal structure, conductive fiber such as carbon fiber or metal fiber; fluorocarbon powder; conductive powder such as aluminum powder or nickel powder; conductive whisker such as zinc oxide or potassium titanate; conductive metal oxide such as titanium oxide; a conductive material such as polyphenylene derivative, or the like may be used.

The negative electrode conductive material may be included in an amount of 1 wt% to 20 wt%, preferably 1 wt% to 15 wt%, and more preferably 1 wt% to 10 wt%, based on the total weight of the negative electrode active material layer. If the content of the negative electrode active material satisfies the above range, it is possible to improve the electrical conductivity of the negative electrode by securing a negative electrode conductive network.

A negative electrode binder is a component that assists in coupling between a negative electrode conductive material, a negative electrode active material, and a negative electrode current collector. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polyethylene, polypropylene, an ethylene-propylene-diene monomer, a sulfonated ethylene-propylene-diene monomer, styrene-butadiene rubber, fluororubber, various copolymers thereof, or the like, and any one thereof or a mixture of two or more thereof may be used.

The negative electrode binder may be included in an amount of 1 wt% to 20 wt%, preferably 1 wt% to 15 wt%, and more preferably 1 wt% to 10 wt%, based on the total weight of the negative electrode active material layer. If the content of the negative electrode binder satisfies the above range, negative electrode active material particles may be smoothly bonded to minimize a problem of volume expansion of the negative electrode active material, and the negative electrode active material may be well attached to the negative electrode current collector.

Meanwhile, when a metal itself is used as the negative electrode without forming a negative electrode active material layer, the negative electrode may be manufactured by using the metal itself, or by physically bonding, roll-pressing, or depositing a metal on the negative electrode current collector. The depositing method may be electrical deposition or chemical vapor deposition.

For example, the metal thin film itself, or the metal bonded/roll-pressed/deposited on the negative electrode current collector may be one metal selected from the group consisting of lithium (Li), nickel (Ni), tin (Sn), copper (Cu), and indium (In), or an alloy of two metals thereof.

**(3) Separator**

A separator may be used without particular limitation as long as it is commonly used as a separator in a lithium secondary battery, and particularly, a separator having excellent moisture-retention capability for an electrolyte solution while having low resistance to ion movement in an electrolyte is preferable.

For example, as the separator, a porous polymer film including a polyolefin-based polymer such as an ethylene homopolymer, a propylene homopolymer, an ethylene/butene copolymer, an ethylene/hexene copolymer, an ethylene/-methacrylate copolymer, or the like, or a stacked structure having two or more layers thereof may be used. In addition, a typical porous non-woven fabric, for example, a non-woven fabric made of glass fiber having a high melting point, polyethylene terephthalate fiber, or the like may be used.

The separator may have a thickness of 5 μm to 20um, preferably 5 μm to 15um, and more preferably 6 μm to 13um. If the thickness of the separator satisfies the above range, it is possible to prevent short circuit between the positive electrode and the negative electrode while minimizing a cell resistance value. As a result, it is possible to improve lifespan properties and output properties of the lithium secondary battery.

**<Electrolyte>**

Meanwhile, the lithium secondary battery according to the present invention may include an electrolyte.

The electrolyte may include an organic solvent and a lithium salt commonly used in the art, but is not particularly limited.

Any organic solvent may be used as the organic solvent without particular limitation as long as it may serve as a medium through which ions involved in an electrochemical reaction of the battery may move. Specifically, as the organic solvent, an ester-based solvent such as methyl propionate, ethyl propionate, methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethylcarbonate (DMC), diethylcarbonate (DEC), methylethylcarbonate (MEC), ethylmethylcarbonate (EMC), ethylene carbonate (EC), or propylene carbonate (PC), or the like may be used alone or in combination.

Preferably, the electrolyte may use, as an organic solvent, a mixed solution of a carbonate-based solvent and an ester-based solvent, and specifically, may use a mixed solution of a cyclic carbonate-based solvent and an ester-based solvent or a mixed solution of a cyclic carbonate-based solvent, a linear carbonate-based solvent, and an ester-based solvent.

The ester-based solvent may be ethyl propionate (EP), and the cyclic carbonate-based solvent may be at least one of ethylene carbonate and propylene carbonate, and the linear carbonate-based solvent may be one or more selected from the group consisting of dimethyl carbonate, diethyl carbonate, and ethyl methyl carbonate.

Ethyl propionate has a lower viscosity than typical electrolyte components, so that when included, there is an effect of increasing ion conductivity of the electrolyte. The ethyl propionate may be included in an amount of 80 wt% or less, specifically 5 wt% to 80 wt%, and more specifically 40 wt% to 70 wt%, based on the total weight of the electrolyte. If the content of ethyl propionate satisfies the above numerical range, it is possible to optimize the viscosity of the electrolyte to achieve excellent ion conductivity of the electrolyte.

Any compound may be used as the lithium salt without particular limitation as long as it can provide lithium ions used in a lithium secondary battery. Specifically, as the lithium salt, $LiN(SO_2F)_2$, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, or $LiB(C_2O_4)_2$ may be used. It is preferable that the lithium salt is included in the electrolyte at a concentration of about 0.6 mol% to about 2 mol%.

The electrolyte according to the present invention may further include an additive to further improve physical properties of the secondary battery.

Examples of the additive may include at least one selected from the group consisting of a cyclic carbonate-based compound, a halogen-substituted carbonate-based compound, a nitrile-based compound, a sultone-based compound, a sulfate-based compound, a phosphate-based compounds, a borate-based compound, a benzene-based compound, an amine-based compound, a silane-based compound, and a lithium salt-based compound.

The cyclic carbonate-based compound may be, for example, vinylene carbonate (VC), vinylethylene carbonate (VEC), or the like.

The halogen-substituted carbonate-based compound may be, for example, fluoroethylene carbonate (FEC) and the like.

The nitrile-based compound may be, for example, succinonitrile, adiponitrile, hexanetricyanide, 1,4-dicyano-2-butene, and the like.

The sultone-based compound may be, for example, 1,3-propanesultone, 1,3-propenesultone, or the like.

The sulfate-based compound may be, for example, ethylene sulfate (ESA), trimethylene sulfate (TMS), methyl trimethylene sulfate (MTMS), or the like.

The phosphate-based compound may be, for example, one or more compounds selected from lithium difluoro(bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl)phosphite.

The borate-based compound may be, for example, tetraphenylborate, lithium oxalyldifluoroborate (LiODFB), or the like.

The benzene-based compound may be, for example, fluorobenzene or the like, the amine-based compound may be triethanolamine, ethylenediamine, or the like, and the silane-based compound may be tetravinylsilane or the like.

The lithium salt-based compound is a compound different from the lithium salt included in the non-aqueous electrolyte solution, and may be one or more compounds selected from the group consisting of $LiPO_2F_2$, LiODFB, lithium bisoxalatoborate $(LiB(C_2O_4)_2)$ (LiBOB), and $LiBF_4$.

Meanwhile, the additives may be used alone, or two or more thereof may be mixed and used.

The total amount of the additive may be 1 wt% to 25 wt%, preferably 1 wt% to 20 wt%, and more preferably 5 wt% to 20 wt%, based on the total weight of the electrolyte solution. If the additive is included in the above range, it is possible to stably form a film on an electrode, suppress an ignition phenomenon during overcharging, prevent a side reaction from occurring during an initial activation process of the secondary battery, or prevent an additive from remaining or precipitated.

**<Battery case>**

The lithium secondary battery according to the present invention may include a cylindrical, prismatic, pouch-type, or coin-type battery case, and may preferably include a pouch-type battery case.

The pouch-type battery case includes a barrier layer, a base layer formed on one surface of the barrier layer, and a sealant layer formed on the other surface of the barrier layer, and includes at least one cup portion recessed in one direction.

Specifically, the pouch-type battery case has flexibility, and may be manufactured by inserting a pouch film laminate, in which the base layer, the barrier layer, and the sealant layer are sequentially stacked, into a press molding device, and stretching the pouch film laminate by applying pressure to a partial region of the pouch film laminate with a punch to form a cup portion having a shape recessed in one direction.

The base layer is disposed on the outermost layer of the pouch to protect an electrode assembly from external impacts and to electrically insulate the electrode assembly.

The base layer may be made of a polymer material, and for example, may be made of one or more polymer materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylenebenzobisoxazole, polyarylate, and Teflon.

The base layer may have a single-layer structure, or may have a multi-layer structure in which different polymer films are stacked. If the base layer has a multi-layered structure, an adhesive layer may be interposed between polymer films.

Meanwhile, the base layer may have an overall thickness of 10 $\mu$m to 60 $\mu$m, preferably 20 $\mu$m to 50 $\mu$m, and more preferably 30 $\mu$m to 50 $\mu$m. If the base layer has a multi-layered structure, the above thickness is a thickness including an adhesive layer. When the base layer satisfies the above range, durability, insulation, and moldability are excellent. If the base layer is too thin, the durability may be reduced, and the base layer may be damaged during a molding process, and if too thick, the moldability may be degraded, the overall thickness of the pouch may increase, and the space for receiving the battery may be reduced, resulting in a decrease in energy density.

The barrier layer is to secure mechanical strength of the pouch-type battery case, block the entry/exit of gases or moisture from the outside of the secondary battery, and prevent leakage of the electrolyte.

The barrier layer may have a thickness of 40 $\mu$m to 100 $\mu$m, preferably 50 $\mu$m to 80 $\mu$m, and more preferably 60 $\mu$m to 80 $\mu$m. If the thickness of the barrier layer satisfies the above range, the moldability is improved, thereby increasing a cup portion molding depth, or the resistance to external stress after the molding is improved since the generation of cracks and/or pinholes is reduced even when two-cup molding is performed.

Meanwhile, the barrier layer may be made of a metal material, and may specifically be composed of an aluminum alloy thin film.

The aluminum alloy thin film may include aluminum, and a metal element other than the aluminum, for example, one or two or more selected from the group consisting of iron (Fe), copper (Cu), chromium (Cr), manganese (Mn), nickel (Ni), magnesium (Mg), silicon (Si) and zinc (Zn).

The sealant layer is to seal the pouch by being bonded through thermal compression, and is positioned in the innermost layer of the pouch film laminate.

The sealant layer is a surface to be in contact with the electrolyte and the electrode assembly after a pouch is molded, and thus, is required to have insulation properties and corrosion resistance, and is required to completely seal the inside to block the movement of substances between the inside and the outside, and thus is required to have high sealing properties.

The sealant layer may be made of a polymer material, and for example, may be made of one or more selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylenebenzobisazole, polyarylate, and Teflon, and among the above, it is particularly preferable that polypropylene (PP) is included, which has excellent mechanical properties such as tensile strength, stiffness, surface hardness, abrasion resistance, and heat resistance, and excellent chemical properties such as corrosion resistance.

The sealant layer may have a single-layered structure, or may have a multi-layered structure including two or more layers composed of different polymer materials.

The sealant layer may have a total thickness of 60 $\mu$m to 100 $\mu$m, preferably 60 $\mu$m to 90 $\mu$m, more preferably 70 $\mu$m to 90 $\mu$m. If the sealant layer is too thin, the sealing durability and insulation properties may be reduced, and if too thick, the bendability may be reduced and the total thickness of the pouch film laminate body may increase, resulting in a decrease in energy density relative to volume.

Meanwhile, the pouch film laminate may be manufactured by a method for manufacturing a pouch film laminate, the method known in the art. For example, the pouch film laminate may be manufactured by a method in which a base layer is attached to an upper surface of a barrier layer by using an adhesive, and then forming a sealant layer on a lower surface of the barrier layer by using co-extrusion or an adhesive, but the embodiment is not limited thereto.

The pouch-type battery case may be sealed while receiving the electrode assembly such that a portion of an electrode lead, i.e., a terminal portion, is to be exposed. Specifically, when the electrode lead is connected to an electrode tab of the electrode assembly and an insulation portion is formed on a portion of the electrode lead, the electrode assembly is received in a receiving space provided in the cup portion, and after the electrolyte is injected, and the pouch-type battery case may be sealed.

The electrode lead may have a thickness of 0.05 mm to 0.5 mm, specifically 0.08 mm to 0.3 mm, and more specifically 0.1 mm to 0.2 mm. If the thickness of the electrode lead satisfies the above numerical range, which is greater than a typical thickness thereof, there is an effect of reducing resistance of the battery, while improving heat resistance by reducing heat during external short circuit.

When the lithium secondary battery according to the present invention is a pouch-type lithium secondary battery, the lithium secondary battery is lighter in weight than a cylindrical secondary battery, and has lowered resistance due to the presence of multiple tabs, thereby having excellent output properties, so that the lithium secondary battery is suitable for use as a battery for a power tool.

Hereinafter, the present invention will be described in more detail with reference to specific examples. However, the following examples are for illustrative purposes only to facilitate the understanding of the present invention, and do not limit the scope of the present invention. It will be apparent to those skilled in the art that various changes and modifications can be made without departing from the scope and spirit of the invention, and it is obvious that such variations and modifications are within the scope of the appended claims.

## Examples and Comparative Examples

### Examples 1 (Manufacturing of lithium secondary battery)

Artificial graphite coated with hard carbon (average particle diameter $D_{50}$ = 19 $\mu$m, BET specific surface area = 0.8 $m^2$/g), carbon black, carboxymethyl cellulose (CMC), and styrene-butadiene rubber (SBR) were mixed at a weight ratio of 94.3 : 2.0 : 1.2 : 2.5, and distilled water was added thereto to prepare a negative electrode slurry. The solid content of the negative electrode slurry was 44 wt%.

The negative electrode slurry was applied on one surface of a copper (Cu) metal thin film having a thickness of 10 $\mu$m at a loading amount of 6.96 mAh/$cm^2$ and then vacuum-dried. Thereafter, the dried negative electrode slurry was roll-pressed, dried in a vacuum oven at 130 °C for 12 hours, and then punched to manufacture a negative electrode.

Li[$Ni_{0.83}CO_{0.11}Mn_{0.06}$]$O_2$ having an average particle diameter $D_{50}$ of 10 $\mu$m as a positive electrode active material, multi-walled carbon nanotubes (CNTs) having a BET specific surface area of 254$m^2$/g, polyvinylidene fluoride (PVdF), and hydrogenated nitrile-based butadiene rubber (H-NBR) were added at a weight ratio of 97.0 : 1.0 : 1.5 : 0.5 to a N-methylpyrrolidone (NMP) solvent and stirred to prepare a positive electrode slurry. The solid content of the positive electrode slurry was 70 wt%.

The positive electrode slurry was applied on one surface of an aluminum thin film having a thickness of 15 $\mu$m at a loading amount of 10.2 mg/$cm^2$, and then vacuum-dried at 130 °C for 10 hours. The dried positive electrode slurry was roll-pressed, dried in a vacuum oven at 130 °C for 12 hours, and then punched to manufacture a positive electrode. The porosity of a positive electrode active material layer included in the positive electrode was 35%.

The positive electrode and the negative electrode manufactured as described above and a porous polyethylene separator having a thickness of 10 $\mu$m were assembled in a stacking manner to manufacture an electrode assembly.

In a solvent in which ethylene carbonate (EC) and ethyl propionate (EP) were mixed at a weight ratio of 35:65, $LiPF_6$ was dissolved to 0.7 M, and LiFSi was dissolved to 0.7 M to prepare an electrolyte.

The electrode assembly was received in a pouch-type battery case, and the electrolyte was injected thereto, and the battery case was sealed to manufacture a lithium secondary battery.

### Examples 2 (Manufacturing of lithium secondary battery)

An electrolyte was prepared in the same manner as in Example 1 except that a solvent in which ethylenecarbonate (EC), ethyl propionate (EP), and ethyl methylcarbonate (EMC) were mixed at a weight ratio of 20:40:40 was used.

A lithium secondary battery was manufactured in the same manner as in Example 1 except that the above electrolyte was used.

### Examples 3 (Manufacturing of lithium secondary battery)

A positive electrode was manufactured in the same manner as in Example 1 except that Li[$Ni_{0.88}Co_{0.07}Mn_{0.05}$]$O_2$ was used as the positive electrode active material, and the loading amount was 9.6 mg/$cm^2$.

A lithium secondary battery was manufactured in the same manner as in Example 1 except that the above positive electrode was used.

### Comparative Example 1 (Manufacturing of lithium secondary battery)

An electrolyte was prepared in the same manner as in Example 1 except that a solvent in which ethylene carbonate (EC) and ethyl methyl carbonate (EMC) were mixed at a weight ratio of 30:70 was used.

A lithium secondary battery was manufactured in the same manner as in Example 1 except that the above electrolyte was used.

**Comparative Example 2 (Manufacturing of lithium secondary battery)**

A positive electrode was manufactured in the same manner as in Example 1 except that the porosity of the positive electrode active material layer was 30%.

An electrolyte was prepared in the same manner as in Example 1 except that a solvent in which ethylene carbonate (EC), ethyl propionate (EP) and ethyl methyl carbonate (EMC) were mixed at a weight ratio of 20:40:40 was used.

A lithium secondary battery was manufactured in the same manner as in Example 1 except that the above positive electrode and the above electrolyte were used.

**Comparative Example 3 (Manufacturing of lithium secondary battery)**

A positive electrode was manufactured in the same manner as in Example 1 except that the porosity of the positive electrode active material layer was 30%.

A lithium secondary battery was manufactured in the same manner as in Example 1 except that the above positive electrode was used.

**Comparative Example 4 (Manufacturing of lithium secondary battery)**

A positive electrode was manufactured in the same manner as in Example 1 except that the porosity of the positive electrode active material layer was 40%.

A lithium secondary battery was manufactured in the same manner as in Example 1 except that the above positive electrode was used.

**Comparative Example 5 (Manufacturing of lithium secondary battery)**

An electrolyte was prepared in the same manner as in Example 1 except that a solvent in which ethylene carbonate (EC) and ethyl propionate (EP) were mixed at a weight ratio of 15:85 was used.

A lithium secondary battery was manufactured in the same manner as in Example 1 except that the above electrolyte was used.

In Examples 1 to 3 and Comparative Examples 1 to 5, the nickel content in the positive electrode active material, the porosity of the positive electrode active material layer, and the composition of the electrolyte are as shown in Table 1 below.

[Table 1]

| | Positive electrode | | Electrolyte |
|---|---|---|---|
| | Content of nickel with respect to total number of moles of transition metals except for lithium (mol%) | Active material layer porosity (%) | Composition (wt%) |
| Example 1 | 83 | 35 | EC:EP = 35:65 |
| Example 2 | 83 | 35 | EC:EP:EMC = 20:40:40 |
| Example 3 | 88 | 35 | EC:EP = 35:65 |
| Comparative Example 1 | 83 | 35 | EC:EMC = 30:70 |
| Comparative Example 2 | 83 | 30 | EC:EP:EMC = 20:40:40 |
| Comparative Example 3 | 83 | 30 | EC:EP = 35:65 |
| Comparative Example 4 | 83 | 40 | EC:EP = 35:65 |
| Comparative Example 5 | 83 | 35 | EC:EP = 15:85 |

**Experimental Example 1 - Continuous discharge test evaluation**

Under the temperature condition of 23 °C, each of the lithium secondary batteries of Examples and Comparative Examples was fully charged up to 4.2 V under the initial 0.6 C condition. Thereafter, using the PNE Cycle program (CTSMonPro, PNE SOLUTION CO. LTD), a continuous discharge test was performed on the lithium secondary batteries by applying a discharge pulse thereto under the conditions described in Table 2 below and allowing a rest period between each pulse application.

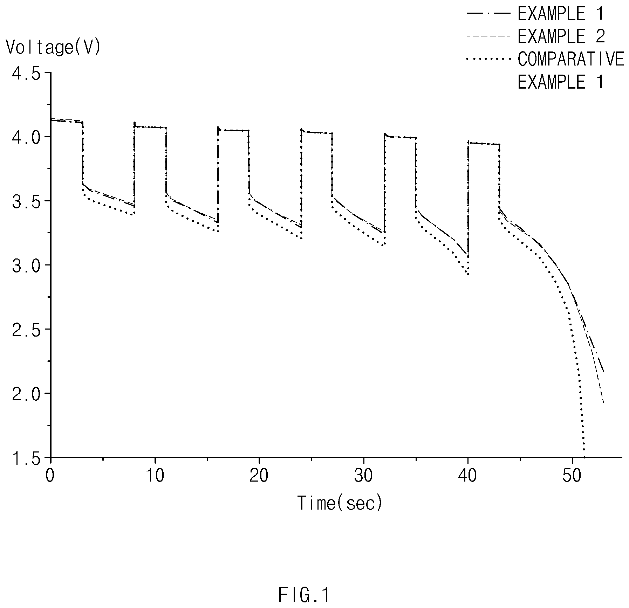

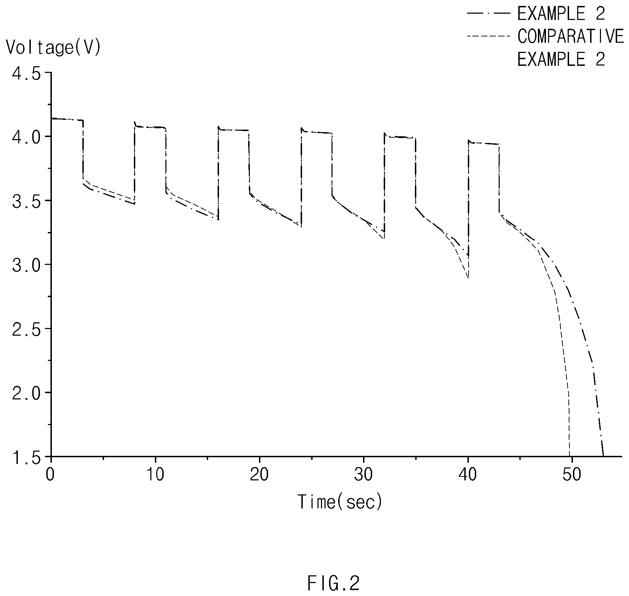

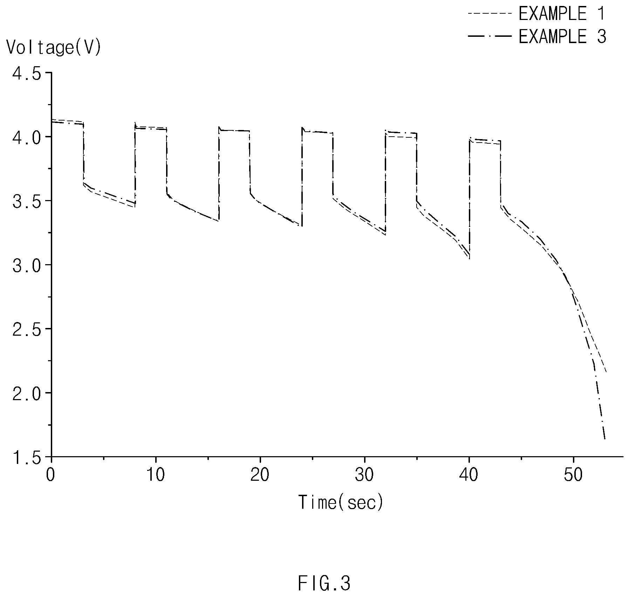

At this time, graphs showing voltage changes of the lithium secondary batteries over time in the continuous discharge test are illustrated in FIG. 1 to FIG. 3. Specifically, FIG. 1 is a graph showing a voltage change of a battery over time when a continuous discharge test is performed on the lithium secondary batteries respectively manufactured in Example 1 and 2 and Comparative Example 1. FIG. 2 is a graph showing a voltage change of a battery over time when a continuous discharge test is performed on the lithium secondary batteries respectively manufactured in Example 2 and Comparative Example 2. FIG. 3 is a graph showing a voltage change of a battery over time when a continuous discharge test is performed on the lithium secondary batteries respectively manufactured in Examples 1 and 3. As shown in FIGS. 1 to 3, it can be seen that when a discharge pulse is applied to a lithium secondary battery, a voltage drop occurs, and the voltage steadily decreases while the pulse is repeatedly applied. In addition, it can be seen that when the discharge pulse application ends, the voltage of the lithium secondary battery is restored.

Meanwhile, in the continuous discharge test, the battery voltage was measured before and after applying each of the first to fifth pulses, which are shown in Table 3 below. At this time, a battery voltage before applying a pulse for each number of times is represented $V_i$, a battery voltage after applying a pulse for each number of times is represented by $V_f$, and the ratio of the battery voltage after applying a pulse for each number of times $V_f$ to the battery voltage before applying a pulse for each number of times $V_i$ is represented by $V_d(\%)$. In addition, from the measured voltage values, a voltage retention rate $V_{d-40}$ during 40 C discharge represented by Equation 1 below, and a voltage retention rate $V'_{d,5}$ during continuous discharge represented by Equation 2 below were calculated and are shown in Table 4 below.

$$[\text{Equation 1}]$$

$$V_{d-40} \ (\%) \ = \ (V_{f-40} \ / \ V_{i-40}) \ \times \ 100$$

In Equation 1 above, $V_{f-40}$ is a voltage of a lithium secondary battery after applying a discharge pulse at a rate of 40 C, and $V_{i-40}$ is a voltage of a lithium secondary battery before applying a discharge pulse at a rate of 40 C.

$$[\text{Equation 2}]$$

$$V'_{d,5} \ (\%) \ = \ (V'_{f,5} \ / \ V'_i) \ \times \ 100$$

In [Equation 2] above, $V'_{f,5}$ is a voltage of a lithium secondary battery after applying a discharge pulse 5 consecutive times, and $V'_i$ is a voltage of a fully-charged lithium secondary battery before applying a discharge pulse. During the continuous discharge, the discharge pulse was applied while increasing the rate by 4 C, and the rate of the initial discharge pulse was 24 C, and the rate of the final discharge pulse was 40 C.

[Table 2]

| Discharge pulse | | | Rate (C) |
|---|---|---|---|
| Number of times of application (times) | Current (A) | Time (s) | |
| 1 | 120 | 5 | 24 |
| 2 | 140 | 5 | 28 |
| 3 | 160 | 5 | 32 |
| 4 | 180 | 5 | 36 |
| 5 | 200 | 5 | 40 |
| 6 | 200 | 10 | 40 |

[Table 3]

| Number of times of discharge pulse application (times) | Example/ Comparative Example | Battery voltage $V_i$ before pulse application for each number of times (V) | Battery voltage $V_f$ after pulse application for each number of times (V) | $V_d$ (%) |
|---|---|---|---|---|
| 1 | Example 1 | 4.123 | 3.465 | 84.04 |
| | Example 2 | 4.124 | 3.480 | 84.38 |
| | Example 3 | 4.123 | 3.480 | 84.40 |
| | Comparative Example 1 | 4.116 | 3.397 | 82.53 |
| | Comparative Example 2 | 4.132 | 3.520 | 85.19 |
| | Comparative Example 3 | 4.125 | 3.502 | 84.90 |
| | Comparative Example 4 | 4.124 | 3.413 | 82.76 |
| | Comparative Example 5 | 4.123 | 3.438 | 83.39 |
| 2 | Example 1 | 4.073 | 3.340 | 82.00 |
| | Example 2 | 4.073 | 3.360 | 82.49 |
| | Example 3 | 4.072 | 3.350 | 82.27 |
| | Comparative Example 1 | 4.065 | 3.262 | 80.25 |
| | Comparative Example 2 | 4.076 | 3.377 | 82.85 |
| | Comparative Example 3 | 4.072 | 3.353 | 82.34 |
| | Comparative Example 4 | 4.074 | 3.273 | 80.34 |
| | Comparative Example 5 | 4.071 | 3.297 | 80.99 |
| 3 | Example 1 | 4.051 | 3.300 | 81.46 |
| | Example 2 | 4.050 | 3.320 | 81.98 |
| | Example 3 | 4.050 | 3.302 | 81.53 |
| | Comparative Example 1 | 4.043 | 3.214 | 79.50 |
| | Comparative Example 2 | 4.051 | 3.292 | 81.26 |
| | Comparative Example 3 | 4.050 | 3.282 | 81.04 |
| | Comparative Example 4 | 4.049 | 3.238 | 79.97 |
| | Comparative Example 5 | 4.049 | 3.244 | 80.12 |
| 4 | Example 1 | 4.033 | 3.241 | 80.36 |
| | Example 2 | 4.032 | 3.261 | 80.88 |
| | Example 3 | 4.033 | 3.251 | 80.61 |
| | Comparative Example 1 | 4.024 | 3.144 | 78.13 |
| | Comparative Example 2 | 4.032 | 3.187 | 79.04 |
| | Comparative Example 3 | 4.032 | 3.159 | 78.35 |
| | Comparative Example 4 | 4.031 | 3.166 | 78.54 |
| | Comparative Example 5 | 4.032 | 3.142 | 77.93 |

(continued)

| Number of times of discharge pulse application (times) | Example/ Comparative Example | Battery voltage $V_i$ before pulse application for each number of times (V) | Battery voltage $V_f$ after pulse application for each number of times (V) | $V_d$ (%) |
|---|---|---|---|---|
| 5 | Example 1 | 4.000 | 3.053 | 76.33 |
| | Example 2 | 3.999 | 3.076 | 76.92 |
| | Example 3 | 3.999 | 3.081 | 77.04 |
| | Comparative Example 1 | 3.990 | 2.929 | 73.41 |
| | Comparative Example 2 | 3.997 | 2.877 | 71.98 |
| | Comparative Example 3 | 3.999 | 2.841 | 71.04 |
| | Comparative Example 4 | 3.998 | 2.941 | 73.56 |
| | Comparative Example 5 | 3.997 | 2.906 | 72.70 |

[Table 4]

| | $V_{i-40}$ (V) | $V_{f-40}$ (V) | $V_{d-40}$ (%) | $V'_i$ (V) | $V'_{f,5}$ (V) | $V'_{d,5}$ (%) |
|---|---|---|---|---|---|---|
| Example 1 | 4.000 | 3.053 | 76.33 | 4.123 | 3.053 | 74.05 |
| Example 2 | 3.999 | 3.076 | 76.92 | 4.124 | 3.076 | 74.59 |
| Example 3 | 3.999 | 3.081 | 77.04 | 4.123 | 3.081 | 74.73 |
| Comparative Example 1 | 3.990 | 2.929 | 73.41 | 4.116 | 2.929 | 71.16 |
| Comparative Example 2 | 3.997 | 2.877 | 71.98 | 4.132 | 2.877 | 69.63 |
| Comparative Example 3 | 3.999 | 2.841 | 71.04 | 4.125 | 2.841 | 68.87 |
| Comparative Example 4 | 3.998 | 2.941 | 73.56 | 4.124 | 2.941 | 71.31 |
| Comparative Example 5 | 3.997 | 2.906 | 72.70 | 4.123 | 2.906 | 70.48 |

As shown in Tables 3 to 4, it can be confirmed that in Examples 1 to 3, the voltage retention rate $V_{d-40}$ of the lithium secondary batteries during 40 C discharge is 74% or greater, which is higher than that in Comparative Examples 1 to 5. In addition, it can be confirmed that in Examples 1 to 3, the voltage retention rate $V'_{d,5}$ of the lithium secondary batteries during continuous discharge is 72% or greater, which is higher than that in Comparative Examples 1 to 5. This means that in Examples 1 to 3, the degree of a voltage drop in a battery is small during high-rate discharge and continuous discharge compared to that in Comparative Examples 1 to 5.

## Claims

1. A lithium secondary battery comprising:

   a battery case; and
   an electrode assembly and an electrolyte received in the battery case, wherein $V_{d-40}$, which is a voltage retention rate during 40 C discharge represented by [Equation 1] below, is 74% or greater:

   $$[Equation\ 1]$$

   $$V_{d-40}\ (\%)\ =\ (V_{f-40}\ /\ V_{i-40})\ \times\ 100$$

   wherein in [Equation 1] above, $V_{f-40}$ is a voltage of the lithium secondary battery after applying a discharge pulse at a rate of 40 C, and $V_{i-40}$ is a voltage of the lithium secondary battery before applying a discharge pulse at a rate of 40 C.

2. The lithium secondary battery of claim 1, wherein the $V_{d-40}$, which is a voltage retention rate during 40 C discharge, is 74% to 85%.

3. The lithium secondary battery of claim 1, wherein $V'_{d,5}$, which is a voltage retention rate during continuous discharge represented by [Equation 2] below, is 72% or greater:

$$[Equation\ 2]$$

$$V'_{d,5}\ (\%)\ =\ (V'_{f,5}\ /\ V'_i)\ \times\ 100$$

wherein in [Equation 2] above, $V'_{f,5}$ is a voltage of the lithium secondary battery after applying a discharge pulse 5 times while increasing a rate by 40 C, and $V'_i$ is an initial voltage of the lithium secondary battery fully charged before applying a discharge pulse.

4. The lithium secondary battery of claim 3, wherein the $V'_{d,5}$, which is a voltage retention rate during continuous discharge, is 72% to 82%.

5. The lithium secondary battery of claim 1, wherein the electrode assembly comprises a positive electrode, a separator, and a negative electrode, wherein the positive electrode includes, as a positive electrode active material, a lithium nickel-based oxide containing 80 mol% or greater of nickel based on the total number of moles of transition metals except for lithium.

6. The lithium secondary battery of claim 5, wherein the positive electrode active material comprises a lithium nickel-based oxide containing 85 mol% to 90 mol% of nickel based on the total number of moles of transition metals except for lithium.

7. The lithium secondary battery of claim 5, wherein the lithium nickel-based oxide is a compound represented by Formula 1 below:

[Formula 1]  $Li_{1+x}[Ni_aCo_bM1_cM2_d]_{1-x}O_{2-y}X_y$

(wherein in Formula 1 above, $0.8{\leq}a{\leq}0.95$, $0{\leq}b{\leq}0.2$, $0{\leq}c{\leq}0.2$, $0{\leq}d{\leq}0.1$, $a+b+c+d=1$, $0{\leq}x{\leq}0.3$, and $0{\leq}y{\leq}0.2$, M1 is Mn, Al, or a combination thereof, M2 is one metal element selected from the group consisting of W, Cu, Fe, V, Cr, Ti, Zr, Zn, In, Ta, Y, La, Sr, Ga, Sc, Gd, Sm, Ca, Ce, Nb, Mg, B, and Mo, and X is one or more elements selected from the group consisting of F, Cl, Br, I, At, P, and S).

8. The lithium secondary battery of claim 5, wherein the positive electrode comprises a positive electrode active material layer with a porosity of greater than 30%.

9. The lithium secondary battery of claim 8, wherein the positive electrode active material layer has a porosity of 32% to 38%.

10. The lithium secondary battery of claim 1, wherein the electrolyte comprises ethyl propionate (EP).

11. The lithium secondary battery of claim 10, wherein the ethyl propionate is included in an amount of 80 wt% or less based on the total weight of the electrolyte.

12. The lithium secondary battery of claim 10, wherein the ethyl propionate is included in an amount of 40 wt% to 70 wt% based on the total weight of the electrolyte.

13. The lithium secondary battery of claim 5, wherein the negative electrode comprises artificial graphite as a negative electrode active material.

14. The lithium secondary battery of claim 1, wherein the battery case is a pouch-type battery case

FIG.1

FIG.2

FIG.3

## INTERNATIONAL SEARCH REPORT

International application No.

**PCT/KR2023/016895**

### A. CLASSIFICATION OF SUBJECT MATTER

**H01M 10/0569**(2010.01)i; **H01M 4/525**(2010.01)i; **H01M 4/505**(2010.01)i; **H01M 4/131**(2010.01)i; **H01M 4/587**(2010.01)i; **H01M 4/36**(2006.01)i; **H01M 10/0525**(2010.01)i; **H01M 50/105**(2021.01)i; **H01M 4/02**(2006.01)i

According to International Patent Classification (IPC) or to both national classification and IPC

### B. FIELDS SEARCHED

Minimum documentation searched (classification system followed by classification symbols)

H01M 10/0569(2010.01); H01M 10/04(2006.01); H01M 10/05(2010.01); H01M 10/052(2010.01); H01M 10/0566(2010.01); H01M 10/058(2010.01); H01M 10/40(2006.01); H01M 4/48(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 전압 유지율(voltage maintenance rate), 리튬 니켈 산화물(lithium nickel oxide), 공극률(porosity), 에틸 프로피오네이트(ethyl propionate)

### C. DOCUMENTS CONSIDERED TO BE RELEVANT

| Category* | Citation of document, with indication, where appropriate, of the relevant passages | Relevant to claim No. |
|---|---|---|
| A | KR 10-2016-0066518 A (LG CHEM, LTD.) 10 June 2016 (2016-06-10) <br> See paragraph [0028]; and claims 1-2 and 4. | 1-14 |
| A | KR 10-2195730 B1 (SAMSUNG SDI CO., LTD.) 28 December 2020 (2020-12-28) <br> See abstract; and paragraphs [0090], [0092], [0127]-[0128] and [0140]. | 1-14 |
| A | JP 06-275277 A (MITSUBISHI CABLE INDUSTRIES LTD.) 30 September 1994 (1994-09-30) <br> See entire document. | 1-14 |
| A | KR 10-2015-0131800 A (PUSAN NATIONAL UNIVERSITY INDUSTRY-UNIVERSITY COOPERATION FOUNDATION) 25 November 2015 (2015-11-25) <br> See entire document. | 1-14 |
| A | KR 10-2019-0042986 A (SAMHWA CAPACITOR CO., LTD.) 25 April 2019 (2019-04-25) <br> See entire document. | 1-14 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **13 February 2024** | **14 February 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/016895**

| Patent document cited in search report | | | Publication date (day/month/year) | Patent family member(s) | | | Publication date (day/month/year) |
|---|---|---|---|---|---|---|---|
| KR | 10-2016-0066518 | A | 10 June 2016 | CN | 107004901 | A | 01 August 2017 |
| | | | | CN | 107004901 | B | 10 July 2020 |
| | | | | KR | 10-1764266 | B1 | 04 August 2017 |
| | | | | US | 10573921 | B2 | 25 February 2020 |
| | | | | US | 11380932 | B2 | 05 July 2022 |
| | | | | US | 2017-0288257 | A1 | 05 October 2017 |
| | | | | US | 2020-0127319 | A1 | 23 April 2020 |
| | | | | WO | 2016-089099 | A1 | 09 June 2016 |
| KR | 10-2195730 | B1 | 28 December 2020 | KR | 10-2015-0133554 | A | 30 November 2015 |
| | | | | US | 10854908 | B2 | 01 December 2020 |
| | | | | US | 2015-0340730 | A1 | 26 November 2015 |
| JP | 06-275277 | A | 30 September 1994 | JP | 3441107 | B2 | 25 August 2003 |
| KR | 10-2015-0131800 | A | 25 November 2015 | KR | 10-1581876 | B1 | 31 December 2015 |
| KR | 10-2019-0042986 | A | 25 April 2019 | | None | | |

Form PCT/ISA/210 (patent family annex) (July 2022)

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220140773
- KR 1020220140774
- KR 1020230143338